# EUROPEAN PATENT APPLICATION

(11) **EP 4 418 745 A1**
(43) Date of publication of application: **21.08.2024**
(21) Application number: 23179727.5
(22) Date of filing: 16.06.2023
(51) Int. Cl.: H04W 48/18, H04W 60/00

(54) **USER EQUIPMENT, COMMUNICATION SYSTEM AND COMMUNICATION METHOD THEREOF**

(30) Priority: 14.02.2023 TW 112105197
(71) Applicant: Wistron Corporation, New Taipei City 22181 (TW)
(72) Inventor: Wang, Shih-Ting, 22181 New Taipei City (TW); Fan, Yu-Wei, 22181 New Taipei City (TW)
(74) Representative: Straus, Alexander

(57) **Abstract**

A user equipment, communication system, and communication method thereof are provided. The communication method for a user equipment includes receiving system information from a communication system and determining whether to send an attach request message to the communication system according to the system information. The system information indicates whether Internet Protocol Multimedia Subsystem or Circuit Switch Fallback is supported or includes at least one field about Internet Protocol Multimedia Subsystem or Circuit Switch Fallback.

## Description

### Field of the Invention

The present invention relates to a user equipment, a communication system, and a communication method thereof, and more particularly, to a user equipment, a communication system, and a communication method thereof that avoid wasting network resources and time.

### Background of the Invention

According to communication protocols, mobile phones that support voice communication must register with a suitable base station by searching for radio communication signals. As indicated in Chapter 7.2a, Figure A.2.1-1, and Figure A.2.2-1 of 3GPP TS 23.221, a network sends an attach accept message to a mobile phone with parameters such as "SMS-only", "CSFB Not Preferred", and "IMS Voice over PS session supported" during the registration procedure. The mobile phone must wait until the registration procedure is completed, before the mobile phone may comprehensively assess whether to stay in the current radio access technology (RAT) or search for other RATs to obtain voice services. However, since the mobile phone does not consider whether a base station supports voice functionality in advance, the mobile phone may find that the network does not support voice after the registration procedure is completed, and need to waste time re-registering with other networks.

### Summary of the Invention

It is therefore an objective of the present invention to provide a user equipment, a communication system, and a communication method thereof able to avoid wasting network resources and time.

An embodiment of the present invention discloses a communication method, for a user equipment, comprising receiving system information from a communication system, wherein the system information indicates whether Internet Protocol Multimedia Subsystem or Circuit Switch Fallback is supported or includes at least one field about Internet Protocol Multimedia Subsystem or Circuit Switch Fallback; and determining whether to send an attach request message to the communication system according to the system information.

Another embodiment of the present invention discloses a user equipment, comprising a processing circuit, configured to execute a program code; and a storage circuit, coupled to the processing circuit and configured to store the program code, wherein the program code instructs the processing circuit to perform steps of receiving system information from a communication system, wherein the system information indicates whether Internet Protocol Multimedia Subsystem or Circuit Switch Fallback is supported or includes at least one field about Internet Protocol Multimedia Subsystem or Circuit Switch Fallback; and determining whether to send an attach request message to the communication system according to the system information.

Another embodiment of the present invention discloses a communication method, for a communication system, comprising sending system information, wherein the system information indicates whether Internet Protocol Multimedia Subsystem or Circuit Switch Fallback is supported or includes at least one field about Internet Protocol Multimedia Subsystem or Circuit Switch Fallback; and detecting an attach request message from a user equipment.

Another embodiment of the present invention discloses a communication system, comprising a processing circuit, configured to execute a program code; and a storage circuit, coupled to the processing circuit and configured to store the program code, wherein the program code instructs the processing circuit to perform steps of sending system information, wherein the system information indicates whether Internet Protocol Multimedia Subsystem or Circuit Switch Fallback is supported or includes at least one field about Internet Protocol Multimedia Subsystem or Circuit Switch Fallback; and detecting an attach request message from a user equipment.

### Brief Description of the Drawings

FIG. 1 is a schematic diagram of a system according to an embodiment of the present application.
FIG. 2 is a schematic diagram of a device according to an embodiment of the present application.
FIG. 3 to FIG. 8 are sequence diagrams of communication methods according to embodiments of the present application.
FIG. 9 and FIG. 10 are flowcharts of communication methods according to embodiments of the present application.

### Detailed Description

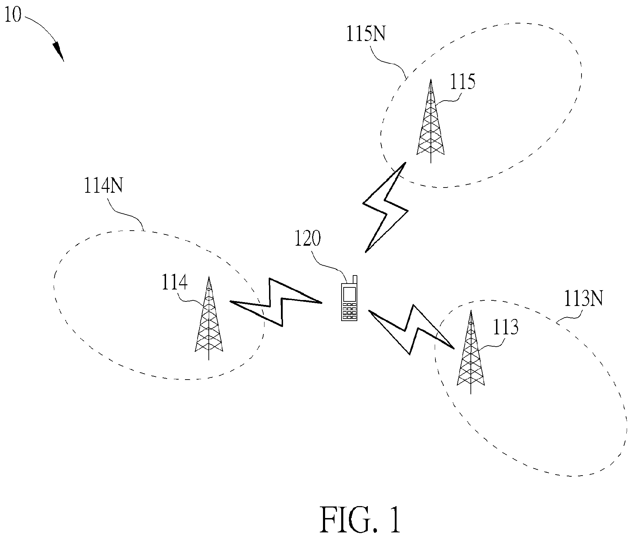

FIG. 1 is a schematic diagram of a system 10 according to an embodiment of the present application. The system 10 at least includes network nodes (or base stations) 113, 114, 115, and a user equipment (UE) 120. The UE 120 may be a voice device. The network nodes 113, 114, 115 belong to access networks 113N, 114N, 115N, respectively.

In one embodiment, the access network 113N may be a Universal Terrestrial Radio Access Network (UTRAN) of a Universal Mobile Telecommunications System (UMTS), and the network node 113 may correspondingly be a node-B (NB). In another embodiment, the access network 114N may be an evolved UTRAN (E-UTRAN) of a Long Term Evolution (LTE) system or an LTE-Advanced (LTE-A) system, and the network node 114 may correspondingly be an evolved-NB (eNB) which may be communicatively coupled to an evolved packet core (EPC) network. In yet another embodiment, the access network 115N may be a fifth Generation (5G) radio access network of a 5G communication system (5GS), and the network node 115 may correspondingly be a next generation node-B (gNB) which may be communicatively coupled to a 5G core network (5GC). However, the present invention is not limited thereto and may apply to other access networks, such as a second-generation (2G) radio access networks, a future access network of a 3rd Generation Partnership Project (3GPP) system (e.g., a Sixth Generation (6G) mobile communication system), or a non-3GPP access network (e.g., a network conforming to the IEEE 802.11 or IEEE 802.16 communication protocol).

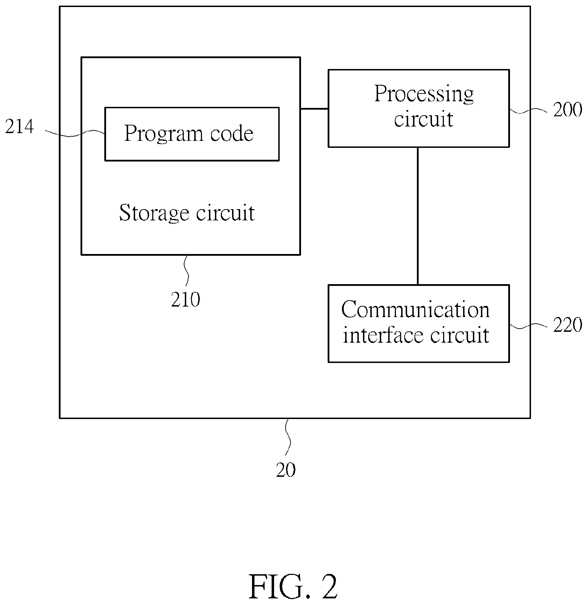

FIG. 2 is a schematic diagram of a device 20 according to an embodiment of the present application. The device 20 may be used as the network node (113, 114, or 115), or the UE 120 shown in FIG. 1, but is not limited thereto. The device 20 may include a processing circuit 200, a storage circuit 210, and a communication interface circuit 220. The storage circuit 210 is configured to store a code 214. The processing unit 200 may read and execute the program code 214 through the storage circuit 210.

In one embodiment, a communication method may be compiled into the code 214 to perform domain selection. The communication method for a UE (e.g., 120) may include the following steps:

### Step S12: Start.

Step S14: (The UE 120) receives system information from a communication system. The system information indicates whether Internet Protocol (IP) Multimedia Subsystem (IMS) or Circuit Switch Fallback (CSFB) is supported.

Step S16: (The UE 120) determines whether to send an attach request message to the communication system according to the system information.

### Step S18: End.

A communication system may include an access network (e.g., 113N, 114N, or 115N) and a core network (CN). The communication system may be a 5GS, Evolved Packet System (EPS), UMTS, or non-3GPP network system, but is not limited thereto. In another embodiment, another communication method may be compiled into the code 214 to perform domain selection. The communication method for a communication system may include the following steps:

### Step S22: Start.

Step S24: (The communication system) sends system information. The system information indicates whether IMS or CSFB is supported.

Step S26: (The communication system) detects an attach request message from a UE (e.g., 120).

### Step S28: End.

In short, the network side (i.e., the communication system) may use system information to provide relevant information so that a UE (e.g., 120) may determine whether a network node (e.g., 113, 114, or 115) meets domain selection requirement(s) set by the UE (e.g., 120) before the UE (e.g., 120) performs a registration procedure (or an attach procedure). If the system information received by the UE (e.g., 120) is from an unsuitable network node (e.g., 115), before the UE (e.g., 120) performs the registration procedure with the unsuitable network node (e.g., 115), the UE (e.g., 120) may skip the unsuitable network node (e.g., 115) and look for a more suitable network node (e.g., 113) to perform a registration procedure. The UE (e.g., 120) does not wait until the registration procedure with the unsuitable network node (e.g., 115) is completed to find out that the unsuitable network node (e.g., 115) is unsuitable, thus saving time and improving efficiency.

System information may provide relevant information about voice call services (e.g., an indication of voice call service capability). Technically, the UE 120 may perform/use voice call operations/services over a circuit-switching (CS) network or a packet-switching (PS) network. IMS may provide voice and other multimedia communication services over an IP network, while CSFB may provide voice call services to IP PS networks that do not support CS calls. Therefore, in one embodiment, the network node (e.g., 115) may make system information block (SIB) of the system information include field(s) indicating whether IMS or CSFB is supported. The SIB may be a SIB of the x-th type (SIBx), where x is a positive integer. The SIB of the x-th type may be an existing SIB (e.g., system information Block Type 1 (SIB1)) or a new undefined SIB. For example, SIB1 in TS36.331 may include the "ims-EmergencySupport-r9" parameter for indicating whether the network node (e.g., 115) supports IMS emergency calls; SIB1 may further include the "ims-Support" parameter for indicating whether the network node (e.g., 115) supports IMS, or the "csfb-Support" parameter for indicating whether the network node (e.g., 115) supports CSFB. In one embodiment, the nonCriticalExtension parameter in the system information may include field(s) about whether the communication system supports IMS or CSFB. In one embodiment, SIBx may include:

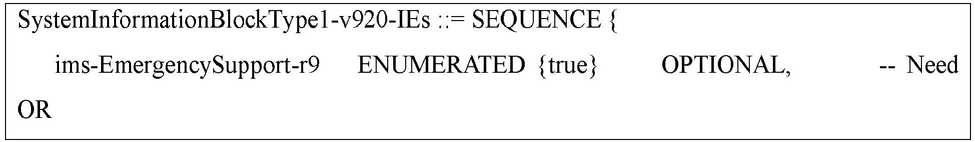

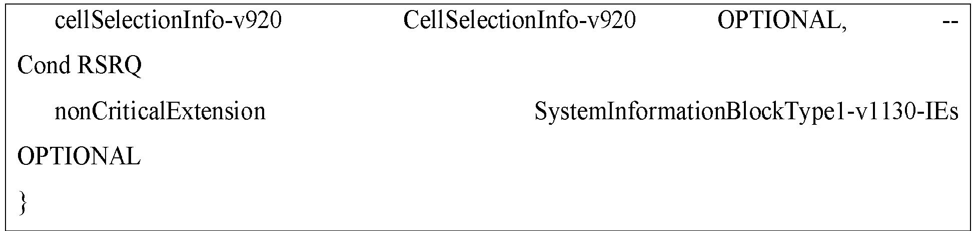

In one embodiment, SIBx may also include:

| |
|---|
| ```
 nonCriticalExtension
 {
    nonCriticalExtension
    {
       ims-EmergencySupport-r9 true
       ims-Support true
       csfb-Support true}}
``` |

In one embodiment, in step S26, the network node (e.g., 115) may receive an attach request message from a LTE (e.g., 120). Subsequently, the network node may respond with an attach accept message. In one embodiment, the attach accept message may not include information/indication indicating whether the communication system supports IMS or CSFB. In one embodiment, the attach accept message (or a registration accept message) may include/carry information/indication indicating whether the communication system supports IMS or CSFB independently.

In one embodiment, the UE (e.g., 120) may first confirm/check whether settings of the UE (e.g., 120) is "IMS voice preferred with CS voice as secondary" and whether settings of the UE (e.g., 120) is "voice-centric". If the network node (e.g., 115) does not support IMS voice and does not support CS voice, the UE (e.g., 120) may, according to the indication of SIBx of the network node (e.g., 115) (corresponding to step S16), skip the network node (e.g., 115) and search for other network node(s) (e.g., 113), or mark the network node (e.g., 115) as low priority. In other words, based on the capabilities supported by the communication system and the capabilities supported by the LTE (e.g., 120), the LTE (e.g., 120) may decide whether to perform a registration procedure with the communication system. As a result, the UE (e.g., 120) may select the appropriate communication system more quickly and avoid wasting network resources and time.

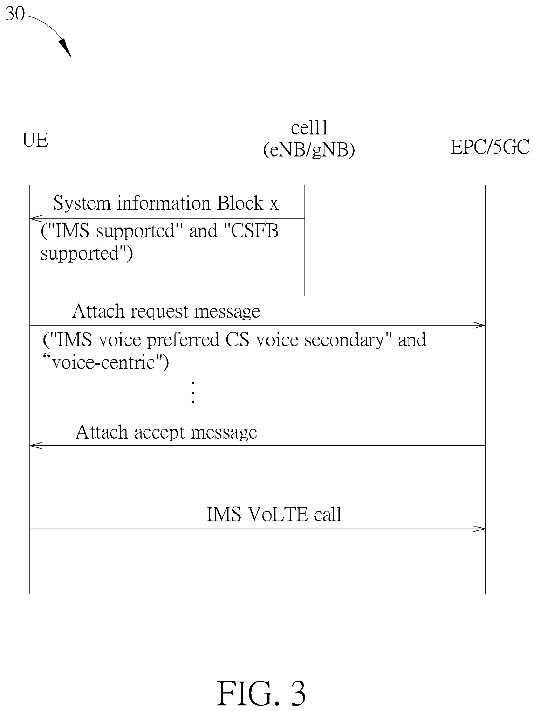

FIG. 3 is a sequence diagram of a communication method 30 according to an embodiment of the present application. An eNB (e.g., the network node 114) or a gNB (e.g., the network node 115) may serve a cell cell1. The UE 120 may receive a SIB (e.g., SIBx) from the cell cell1 of the eNB or gNB (corresponding to step S14). If the SIB includes information/indication indicating that IMS and CSFB are supported (e.g., "IMS supported" and "CSFB supported"), the UE 120 may perform a registration procedure with the EPC or 5GC (e.g., by sending an attach request message) (corresponding to step S16). The attach request message may include information/indication about/of "IMS voice preferred with CS voice as secondary" and "voice-centric". The attach request message may be sent directly to an Access and Mobility Function (AMF) unit or sent to the AMF unit via an access network (e.g., the network node of the eNB or gNB of the access network). After the registration procedure is completed, the UE 120 may use Voice over LTE (VoLTE) in the EPC or 5GC network to perform/use voice call operations/services (i.e., an IMS VoLTE call) with the use of data transmission of the (mobile) network.

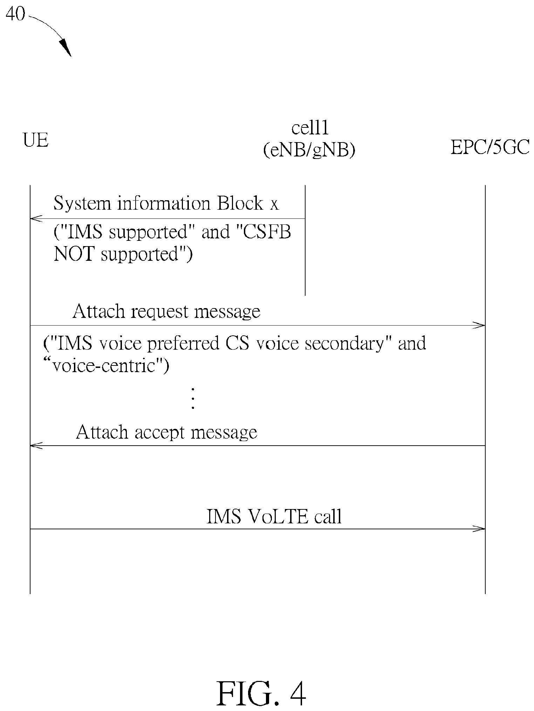

FIG. 4 is a sequence diagram of a communication method 40 according to an embodiment of the present application. Different from FIG. 3, in FIG. 4, if a SIB (e.g., SIBx) received by the LTE 120 from the cell cell1 of the eNB or gNB includes information/indication indicating that IMS is supported but CSFB is not supported (e.g., "IMS supported" and "CSFB NOT supported") (corresponding to step S14), the LTE 120 may perform a registration procedure with the EPC or 5GC (e.g., by sending an attach request message) (corresponding to step S16). After the registration procedure is completed, the LTE 120 may use VoLTE in the EPC or 5GC network to perform/use voice call operations/services.

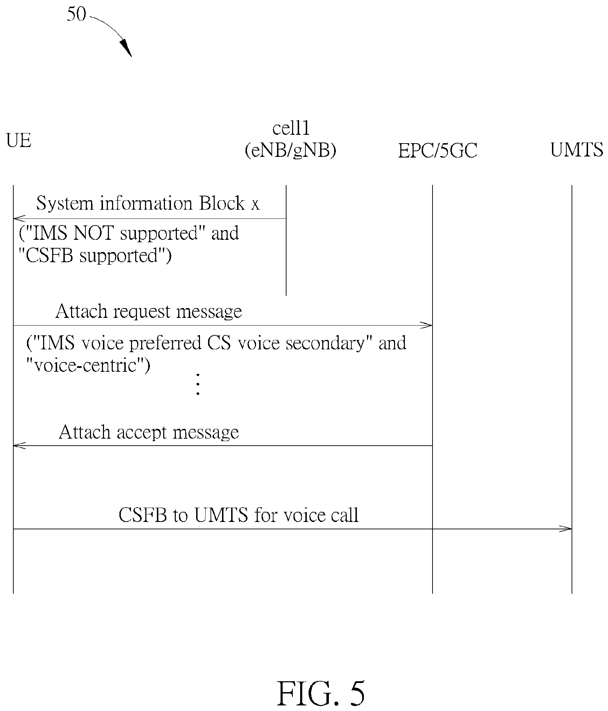

FIG. 5 is a sequence diagram of a communication method 50 according to an embodiment of the present application. Different from FIG. 3, in FIG. 5, if a SIB (e.g., SIBx) received by the LTE 120 from the cell cell1 of the eNB or gNB includes information/indication indicating that IMS is not supported but CSFB is supported (e.g., "IMS NOT supported" and "CSFB supported") (corresponding to step S14), the LTE 120 may perform a registration procedure with the EPC or 5GC (e.g., by sending an attach request message) (corresponding to step S16). After the registration procedure is completed, if the UE 120 intends to make or receive a voice call (i.e., use voice call services), the LTE 120 may fall back to a UMTS network (or 2G network) to perform/use voice call operations/services in UMTS. After the voice call ends, the UE 120 may return to the EPC or 5GC network.

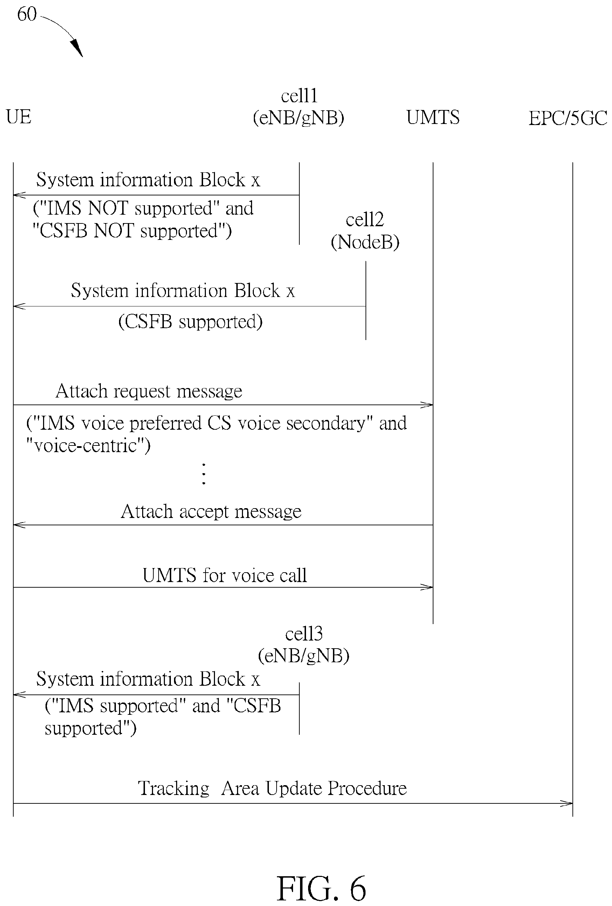

FIG. 6 is a sequence diagram of a communication method 60 according to an embodiment of the present application. An eNB (e.g., the network node 114) or a gNB (e.g., the network node 115) may serve the cell cell1 or a cell cell3, and a node-B (e.g., the network node 113) may serve a cell cell2. Different from FIG. 3, in FIG. 6, if a SIB (e.g., SIBx) received by the LTE 120 from the cell cell1 of the eNB or gNB includes information/indication indicating that IMS and CSFB are not supported (e.g., "IMS NOT supported" and "CSFB NOT supported") (corresponding to step S14), the UE 120 does not perform a registration procedure with the cell cell1 and ranks the cell cell1 as a low priority. The UE 120 may search for other suitable cell(s) (i.e., a cell supporting IMS or CSFB). In one embodiment, the LTE 120 may first search for a cell supporting IMS or CSFB in the eNB or gNB; if there is no suitable cell in the eNB or gNB, the UE 120 may then search for suitable cell(s) in the node-B. If a SIB (e.g., SIBx) received by the LTE 120 from the cell cell2 of the node-B includes information/indication indicating that CSFB is supported (e.g., "CSFB supported") (corresponding to step S14), the LTE 120 may perform a registration procedure with the (core) network of the UMTS (e.g., by sending an attach request message) (corresponding to step S16). After the registration procedure is completed, the UE 120 may perform/use voice call operations/services in the UMTS network. In one embodiment, if any suitable cell appears/becomes available in the eNB or gNB later, the UE 120 may initiate a Tracking Area Update (TAU) procedure (e.g., by sending a TAU request message) and return to the EPC or 5GC network.

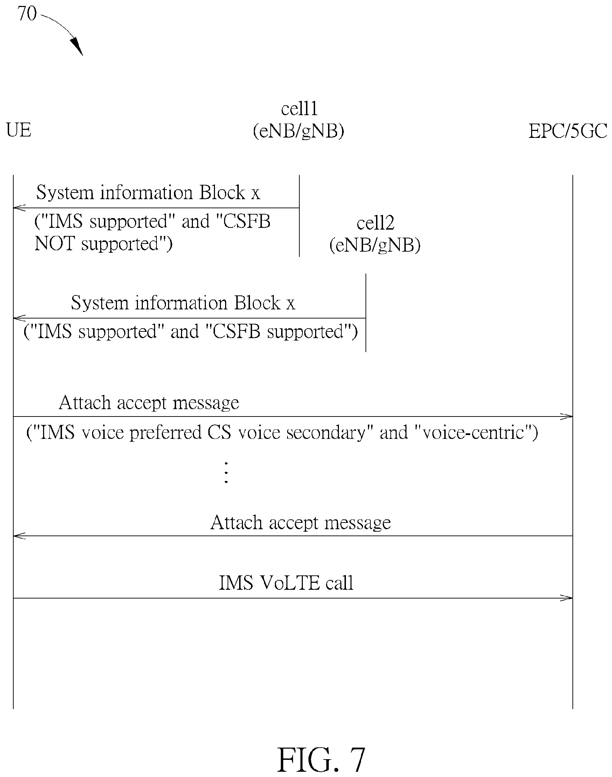

FIG. 7 is a sequence diagram of a communication method 70 according to an embodiment of the present application. An eNB (e.g., the network node 114) or a gNB (e.g., the network node 115) may serve the cell cell1 or cell2. Different from FIG. 3, in FIG. 7, if a SIB (e.g., SIBx) received by the LTE 120 from the cell cell1 of the eNB or gNB includes information/indication indicating that IMS and CSFB are not supported (e.g., "IMS NOT supported" and "CSFB NOT supported") (corresponding to step S14), the UE 120 does not perform a registration procedure with the cell cell1 and makes the cell cell1 a low priority. The UE 120 may search for other suitable cell(s). If a SIB (e.g., SIBx) received by the UE 120 from the cell cell2 of the/another eNB or gNB includes information/indication indicating that IMS and CSFB are supported (e.g., "IMS supported" and "CSFB supported") (corresponding to step S14), the LTE 120 may perform a registration procedure with the EPC or 5GC (e.g., by sending an attach request message) (corresponding to step S16). After the registration procedure is completed, the UE 120 may use VoLTE in the EPC or 5GC network to perform/use voice call operations/services.

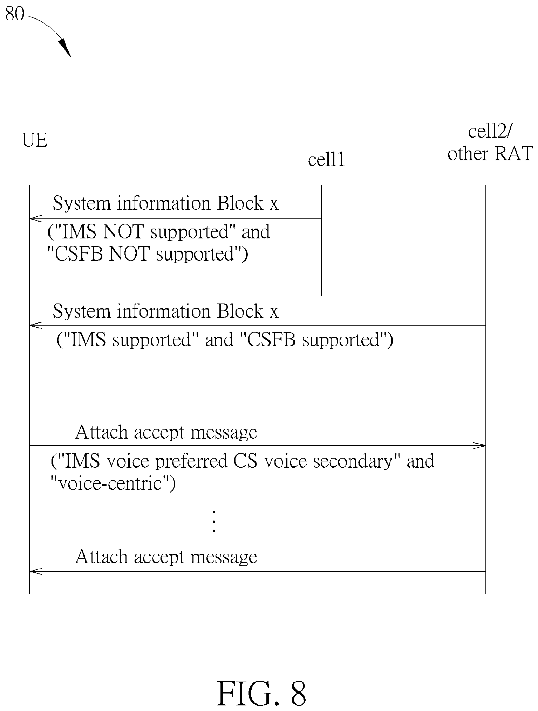

FIG. 8 is a sequence diagram of a communication method 80 according to an embodiment of the present application. The cell cell1 or cell2 is an LTE cell. Different from FIG. 3, in FIG. 8, if a SIB (e.g., SIBx) received by the UE 120 from the LTE cell cell1 includes information/indication indicating that IMS and CSFB are not supported (e.g., "IMS NOT supported" and "CSFB NOT supported") (corresponding to step S14), the LTE 120 does not perform a registration procedure with the cell cell1 and sets the cell cell1 as a low priority. The LTE 120 may search for other suitable cell(s). If a SIB (e.g., SIBx) received by the LTE 120 from the LTE cell cell2 or other radio access technology (RAT) includes information/indication indicating that IMS and CSFB are supported (e.g., "IMS supported" and "CSFB supported") (corresponding to step S14), the UE 120 may perform a registration procedure with the cell (e.g., by sending an attach request message) (corresponding to step S16) to perform/use voice call operations/services.

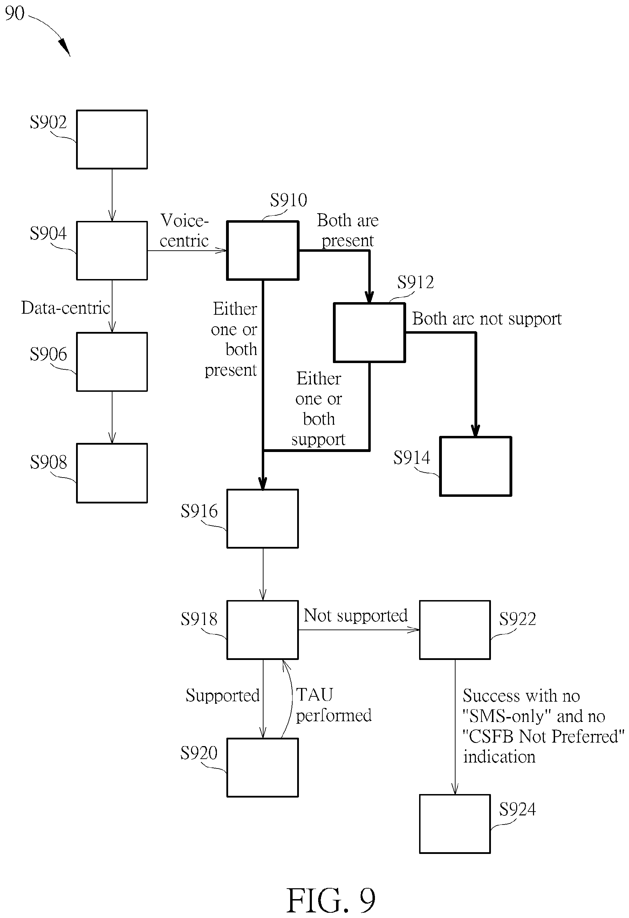

FIG. 9 is a flowchart of a communication method 90 according to an embodiment of the present application. The communication method 90 may include the following steps:
Step S902: A UE is set to "IMS voice preferred with CS voice as secondary". (The UE) checks whether the setting(s) is/are "IMS voice preferred with CS voice as secondary".
Step S904: (The UE) checks whether the setting(s) is/are "voice-centric" or "data-centric". (The UE) checks for voice-centric or data-centric setting.
Step S906: (The UE) initiates an EPS attach procedure (not combined).
Step S908: (The UE) stays in the current RAT.
Step S910: (The LTE) chooses a cell, reads an SIB1, and checks CSFB and IMS support indication(s).
Step S912: (The UE) check whether CSFB and/or IMS is/are supported from the network.
Step S914: (The LTE) sets the cell as "low priority" and select another cell or RAT.
Step S916: (The UE) initiates an EPS attach procedure (not combined).
Step S918: (The LTE) check for IMS voice support indication(s) from the network.
Step S920: (The UE) uses IMS voice.
Step S922: (The UE) performs a combined TAU for CSFB as in TS23.272.
Step S924: (The UE) uses CSFB.

In the communication method 90, after the LTE 120 is powered on, the LTE 120 attempts to synchronize with a network node (e.g., 114). In steps S906 and S908, when the UE 120 is "data-centric", the UE 120 may attempt to initiate an EPS attach procedure and may stay in the current RAT.

In step S910, when the UE 120 is set to "voice-centric", the UE 120 should ensure that voice service is possible. The UE 120 may select a cell and check whether information, which is related to the network node (e.g., 114) and obtained in a broadcast channel (e.g., a broadcast control channel (BCCH)), includes indication(s) of whether IMS or CSFB is supported. If the SIB does not have a field about IMS or a field about CSFB, the LTE 120 may perform a registration procedure with the network according to 3GPP specifications. In step S914, if the SIB includes indication(s) of not supporting IMS and not supporting CSFB, the UE 120 may deprioritize the cell and select other cells or RATs for voice call services. In other words, when the network informs the LTE 120 that there is no support for voice communication or CSFB function on the network side, the LTE 120 needs to select/move to another domain (e.g., 3G or 2G) to meet the requirement of being voice-centric.

In step S916, if the SIB includes field(s) about IMS or CSFB (e.g., the SIB only includes an indication of not supporting IMS but fails to specify whether CSFB is supported) (e.g., the SIB only includes an indication of not supporting CSFB but fails to specify whether IMS is supported) (e.g., the SIB only includes field(s) about IMS or CSFB but fails to specify whether IMS or CSFB is supported), or if the SIB includes indication(s) of supporting IMS (e.g., the SIB only includes an indication of supporting IMS but fails to specify whether CSFB is supported) (e.g., the SIB includes indication(s) of supporting IMS but not supporting CSFB) or indication(s) of supporting CSFB (e.g., the SIB only includes an indication of supporting CSFB but fails to specify whether IMS is supported) (e.g., the SIB includes indication(s) of supporting CSFB but not supporting IMS) (e.g., the SIB includes indication(s) of supporting both IMS and CSFB), the UE 120 may try to initiate an EPS attach procedure. (That is, a SIB may or may not include a field about IMS or CSFB. A field may or may not include an indication specifying whether IMS or CSFB is supported.) In step S918, the UE 120 may determine whether the network node (e.g., 115) supports IMS voice based on the SIB (e.g., the SIB1) or an attach accept message. In step S920, the LTE 120 may use VoLTE to perform/use voice call operations/services based on indication(s) of supporting IMS. Alternatively, in steps S922 and S924, the LTE 120 may perform a combined TAU procedure based on indication(s) of not supporting IMS according to TS23.272. When the combined TAU procedure is successful without receiving indication(s) of "Short Message Service only (SMS-only)" or "CSFB not preferred", the LTE 120 may use CSFB to perform/use voice call operations/services.

In other words, the eNB or gNB is able to provide parameter(s) supporting IMS or parameter(s) supporting CSFB, the LTE 120 may determine whether to perform a registration procedure with the eNB or gNB based on these parameters. Furthermore, the LTE 120 may sort the network supporting both IMS and CSFB as the highest registration priority to avoid unnecessary registration procedure(s) and waste of network resources.

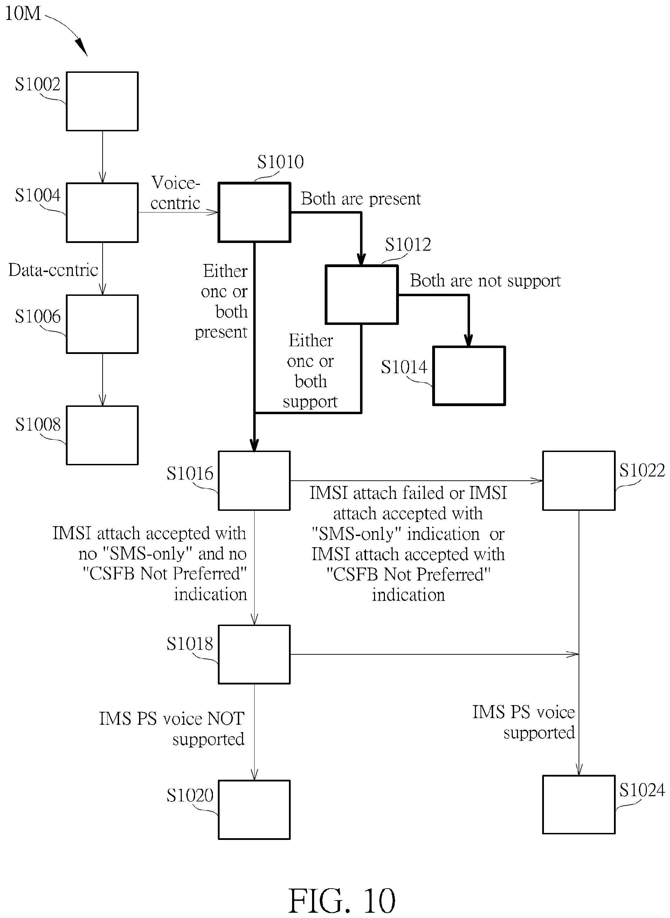

FIG. 10 is a flowchart of a communication method 10M according to an embodiment of the present application. The communication method 10M may include the following steps:
Step S1002: A UE is set to "IMS voice preferred with CS voice as secondary". (The UE) checks whether the setting(s) is/are "IMS voice preferred with CS voice as secondary".
Step S1004: (The LTE) checks whether the setting setting(s) is/are "voice-centric" or "data-centric". (The UE) checks for voice-centric or data-centric setting.
Step S1006: (The UE) initiates an EPS attach procedure (not combined).
Step S1008: (The UE) stays in the current RAT.
Step S1010: (The LTE) chooses a cell, reads an SIB1, and checks CSFB and IMS support indication(s).
Step S1012: (The UE) check whether CSFB and/or IMS is/are supported from the network.
Step S1014: (The LTE) sets the cell as "low priority" and select another cell or RAT.
Step S1016: (The UE) initiates a combined EPS/IMSI (International Mobile Subscriber Identity (IMSI)) attach procedure.
Step S1018: (The UE) check for "IMS Voice over PS session (IMS VoPS session) supported indication" from the network.
Step S1020: (The UE) uses CSFB.
Step S1022: (The UE) check for "IMS VoPS session supported indication" from the network.
Step S1024: (The UE) uses IMS PS voice.

Different from FIG. 9, in step S1016, if an SIB includes field(s) about IMS or CSFB, or if the SIB includes indication(s) of supporting IMS or CSFB, the UE 120 may try to initiate a combined EPS/IMSI attach procedure. In step S1018, when the IMSI attach is accepted without receiving indication(s) of "SMS-only" or "CSFB not preferred", the LTE 120 checks "IMS VoPS session supported indication" from the network. In step S1020, if the network indicates that the IMS PS voice is not supported, the UE 120 may use CSFB to perform/use voice call operations/services. In step S1022, when the IMSI attach fails or when IMSI attach is accepted and the UE 120 receives indication(s) of "SMS-only" or "CSFB not preferred", the UE 120 checks "IMS VoPS session supported indication" from the network. After step S1018 or S1022, if the network indicates that the IMS PS voice is supported, the UE 120 may use IMS PS voice to perform/use voice call operations/services.

In one embodiment, if the LTE 120, which is set to "voice-centric" and supports both 5GC and EPC, cannot obtain voice services in a 5GS, the UE 120 should not choose a cell that is connected to only the 5GS. By disabling the ability to access the 5GS, the UE 120 may first reselect to an E-UTRAN connected to the/another EPC and perform a voice domain selection procedure. After registering with the EPS, the LTE 120 may determine whether to use VoLTE, CSFB, or CS calls by checking "IMS VoPS session supported indication", success of the combined EPS/IMSI attach procedure, or indication(s) of "SMS-only", and so on.

In other words, a network node may use system information to broadcast indication(s) of whether IMS or CSFB is supported, and the LTE 120 may perform domain selection accordingly. For example, indication(s) of whether IMS or CSFB is supported may be provided within SIB(s). Therefore, the UE 120 may select a suitable cell or RAT before non-access stratum (NAS) procedure(s) (e.g., an attach, registration, or TAU procedure). When the system information indicates that the core network connected to the network node supports neither IMS nor CSFB, the UE 120 may skip the registration procedure that would otherwise carry out with the core network.

In one embodiment, the processing circuit 200 may be a microprocessor or an application specific integrated circuit (ASIC). In one embodiment, the communication interface circuit 220 may be a transceiver, which may be used to transmit and receive signals (e.g., messages or packets) based on processing results of the processing circuit 200. In one embodiment, the storage circuit 210 may be any data storage device, such as a subscriber identity module (SIM), read-only memory (ROM), flash memory, random-access memory (RAM), CD-ROM/DVD-ROM, magnetic tape, hard disk, or optical data storage device.

The UE 120 may be a client device, a machine type communication (MTC) device, an Internet of things (IoT) device, a mobile phone, a laptop, or a tablet.

In summary, the present invention adds additional information/indication (e.g., parameter(s) of whether a network side supports IMS or CSFB) to system information. Before the registration procedure, a UE may read the system information of the network side to determine if the current base station meets the requirements for supporting voice.

## Claims

1. A communication method, for a user equipment (120), **characterised by,** comprising:
receiving system information from a communication system, wherein the system information indicates whether Internet Protocol Multimedia Subsystem or Circuit Switch Fallback is supported or includes at least one field about Internet Protocol Multimedia Subsystem or Circuit Switch Fallback; and
determining whether to send an attach request message to the communication system according to the system information.

2. The communication method of claim 1, **characterised in that,** the user equipment sends the attach request message to the communication system according to the system information indicating that Internet Protocol Multimedia Subsystem or Circuit Switch Fallback is supported, and the user equipment does not send the attach request message to the communication system according to the system information indicating that Internet Protocol Multimedia Subsystem and Circuit Switch Fallback are not supported.

3. The communication method of any of claims 1-2, **characterised in that,**
the user equipment makes the communication system a low priority according to the system information indicating that Internet Protocol Multimedia Subsystem and Circuit Switch Fallback are not supported, or
the user equipment searches for or registers with another communication system according to the system information indicating that Internet Protocol Multimedia Subsystem and Circuit Switch Fallback are not supported.

4. The communication method of any of claims 1-3, **characterised in that,** the user equipment sends the attach request message to the communication system according to the system information including the at least one field.

5. The communication method of any of claims 1-4, **characterised in that,** the communication system is a fifth generation communication system, an evolved packet system, a universal mobile telecommunications system or a non-3rd Generation Partnership Project network system.

6. The communication method of any of claims 1-5, **characterised by,** further comprising:
receiving an attach accept message from the communication system after sending the attach request message.

7. The communication method of any of claims 1-6, **characterised in that,** a nonCriticalExtension parameter of the system information includes the at least one field.

8. A user equipment, **characterised by,** comprising:
a processing circuit, configured to execute a program code; and
a storage circuit, coupled to the processing circuit and configured to store the program code, wherein the program code instructs the processing circuit to perform the communication method of any of claims 1-7.

9. A communication method, for a communication system, **characterised by,** comprising:
sending system information, wherein the system information indicates whether Internet Protocol Multimedia Subsystem or Circuit Switch Fallback is supported or includes at least one field about Internet Protocol Multimedia Subsystem or Circuit Switch Fallback; and
detecting an attach request message from a user equipment (120).

10. The communication method of claim 9, **characterised in that,** the user equipment sends the attach request message to the communication system according to the system information indicating that Internet Protocol Multimedia Subsystem or Circuit Switch Fallback is supported, and the user equipment does not send the attach request message to the communication system according to the system information indicating that Internet Protocol Multimedia Subsystem and Circuit Switch Fallback are not supported.

11. The communication method of any of claims 9-10, **characterised in that,** the user equipment sends the attach request message to the communication system according to the system information including the at least one field, and the user equipment searches for or registers with another communication system according to the system information indicating that Internet Protocol Multimedia Subsystem and Circuit Switch Fallback are not supported.

12. The communication method of any of claims 9-11, **characterised in that,** the communication system is a fifth generation communication system, an evolved packet system, a universal mobile telecommunications system or a non-3rd Generation Partnership Project network system.

13. The communication method of any of claims 9-12, **characterised in that,** the communication system sends an attach accept message corresponding to the attach request message after receiving the attach request message.

14. The communication method of any of claims 9-13, **characterised in that,** a nonCriticalExtension parameter of the system information includes the at least one field.

15. A communication system, **characterised by,** comprising:
a processing circuit, configured to execute a program code; and
a storage circuit, coupled to the processing circuit and configured to store the program code, wherein the program code instructs the processing circuit to perform the communication method of any of claims 9-14.

## Amended claims

### Amended claims in accordance with Rule 137(2) EPC.

1. A communication method, for a user equipment (120), **characterised by,** comprising:
receiving, by the user equipment, system information from a communication system, wherein the system information indicates whether Internet Protocol Multimedia Subsystem or Circuit Switch Fallback is supported or includes at least one field about Internet Protocol Multimedia Subsystem or Circuit Switch Fallback, and the communication system comprises an access network and a core network;
determining, by the user equipment, whether to send an attach request message to the communication system according to the system information, wherein the user equipment is configured to send the attach request message to the communication system according to the system information; and
receiving, by the user equipment, an attach accept message from the communication system after sending the attach request message.

2. The communication method of claim 1, **characterised in that,** the user equipment sends the attach request message to the communication system according to the system information indicating that Internet Protocol Multimedia Subsystem or Circuit Switch Fallback is supported, and the user equipment skips transmission of the attach request message to the communication system according to the system information indicating that Internet Protocol Multimedia Subsystem and Circuit Switch Fallback are not supported.

3. The communication method of any of claims 1-2, **characterised in that,**
the user equipment makes the communication system a low priority according to the system information indicating that Internet Protocol Multimedia Subsystem and Circuit Switch Fallback are not supported, or
the user equipment searches for or registers with another communication system according to the system information indicating that Internet Protocol Multimedia Subsystem and Circuit Switch Fallback are not supported, and the another communication system comprises an access network and a core network.

4. The communication method of any of claims 1-3, **characterised in that,** the communication system is a fifth generation communication system, an evolved packet system, a universal mobile telecommunications system or a non-3rd Generation Partnership Project network system.

5. The communication method of any of claims 1-4, **characterised in that,** a nonCriticalExtension parameter of the system information includes the at least one field.

6. A user equipment, **characterised by,** comprising:
a processing circuit, configured to execute a program code; and
a storage circuit, coupled to the processing circuit and configured to store the program code, wherein the program code instructs the processing circuit to perform the communication method of any of claims 1-5.

7. A communication method, for a communication system, **characterised by,** comprising:
sending, by the communication system, system information, wherein the system information indicates whether Internet Protocol Multimedia Subsystem or Circuit Switch Fallback is supported or includes at least one field about Internet Protocol Multimedia Subsystem or Circuit Switch Fallback, and the communication system comprises an access network and a core network; and
detecting, by the communication system, an attach request message from a user equipment (120), wherein the user equipment is configured to determine whether to send the attach request message to the communication system according to the system information received by the user equipment.

8. The communication method of claim 7, **characterised in that,** the communication system receives the attach request message sent from the user equipment after the communication system sends the system information indicating that Internet Protocol Multimedia Subsystem or Circuit Switch Fallback is supported, and the communication system fails to detect the attach request message after the communication system sends the system information indicating that Internet Protocol Multimedia Subsystem and Circuit Switch Fallback are not supported.

9. The communication method of any of claims 7-8, **characterised in that,** the communication system receives the attach request message sent from the user equipment after the communication system sends the system information including the at least one field, and the user equipment searches for or registers with another communication system after the communication system sends the system information indicating that Internet Protocol Multimedia Subsystem and Circuit Switch Fallback are not supported.

10. The communication method of any of claims 7-9, **characterised in that,** the communication system is a fifth generation communication system, an evolved packet system, a universal mobile telecommunications system or a non-3rd Generation Partnership Project network system.

11. The communication method of any of claims 7-10, **characterised in that,** the communication system sends an attach accept message corresponding to the attach request message after receiving the attach request message.

12. The communication method of any of claims 7-11, **characterised in that,** a nonCriticalExtension parameter of the system information includes the at least one field.

13. A communication system, **characterised by,** comprising:
an access network; and
a core network, communicatively coupled to the access network, wherein the communication system is configured to perform the communication method of any of claims 7-12.
